# EUROPEAN PATENT SPECIFICATION

(11) **EP 3 260 734 B1**
(45) Date of publication and mention of the grant of the patent: **23.01.2019**
(21) Application number: 17176480.6
(22) Date of filing: 16.06.2017
(51) Int. Cl.: F16F 15/14

(54) **METHOD FOR THE PRODUCTION OF A FLYWHEEL MASS**
VERFAHREN ZUR HERSTELLUNG EINER SCHWUNGMASSE
MÉTHODE DE PRODUCTION D'UNE MASSE D'INERTIE.

(30) Priority: 24.06.2016 IT UA20164639
(43) Date of publication of application: 27.12.2017
(73) Proprietor: Moretto S.P.A., 36027 Rosà (VI) (IT)
(72) Inventor: MORETTO, Alfredino, 36027 ROSÀ (VI) (IT)
(74) Representative: Marchioro, Paolo

(56) References cited:
- DE-A1-102010 054 297
- DE-U1-202015 004 276

## Description

The present invention regards a method for producing a damping mass for a flywheel, in particular a transmission flywheel.

As known, a flywheel is widely used in transmissions, in particular in vehicle clutches, with the aim of preventing sudden engine torque variations, for example such as the ones caused by change of gear ratio, from generating unwanted stresses and vibrations on the shaft.

In order to increase the efficiency of the flywheel there is also known the use of damping masses, slidably associated to the flywheel so as to be able to be displaced around the axis of the flywheel with respect to a balance position established by springs.

In the presence of rotary regime variations of the flywheel, the damping masses are displaced from the aforementioned balance position due to the inertia thereof so as to reduce stresses on the shaft.

Each damping mass is constrained to the flywheel through pins, each with an end fixed to a corresponding through slot belonging to the damping mass and with the opposite end slidably inserted into a further through slot belonging to the flywheel. In order to guarantee efficient constraint between the pins and each damping mass, the respective through slots have a given number of zones of the inner surface thereof having extremely narrow dimensional tolerances. The aforementioned zones correspond to contact zones between the pins and the through slots.

In the prior art, the through slots of the damping masses are obtained through fine blanking, in a manner such to also obtain the tolerance required in the aforementioned areas.

As known, fine blanking is a method typically utilised to obtain gears, in that it enables obtaining a greater precision with respect to normal blanking.

However, this blanking method reveals the drawback of being slow, limiting production and increasing unitary production costs with respect to normal blanking. Furthermore, fine blanking plants are more costly with respect to normal blanking plants, thus leading to an increase of the unitary cost of the product in this case too.

The present invention has the object of overcoming the above mentioned drawbacks of the known methods for producing damping masses for flywheels.

In particular, the present invention has the object of implementing a method for producing damping masses for flywheels suitable to reduce the cost of the masses with respect to that of the damping masses obtained with the known methods, considering the same quality.

The aforementioned object is attained by a method for producing damping masses according to claim 1.

The aforementioned object is also attained by a method for providing a flywheel according to claim 15.

The relative dependent claims outline further detail characteristics of the invention.

Advantageously, the method of the invention enables obtaining damping masses in which the surface of the through slots has greater mechanical properties with respect to those of damping masses obtained through the known methods. Thus, the damping masses obtained with the method of the invention have greater resistance to stresses at the points of coupling with the flywheel, thus conferring high reliability to the latter.

Still advantageously, the surface of the through slots of the damping mass obtained with the method of the invention has a low degree of surface roughness, thus enabling a particularly accurate coupling with the pin and thus limiting the wear of the die used for calibrating the slot, as clearly observable hereinafter.

The aforementioned object and advantages, alongside others to be mentioned hereinafter, will be apparent from the following description of a preferred embodiment of the method of the invention, herein provided by way of nonlimiting example with reference to the attached drawings, wherein:
- figure 1 schematically represents a flywheel provided with damping masses that can be obtained according to the method of the invention, in plan view;
- figure 2 represents the flywheel of figure 1, in lateral cross-sectional view;
- figure 3 represents the damping mass of the flywheel of figure 1, in axonometric view;
- figure 4 represents a detail of the damping mass of figure 3, in plan view;
- figures 5 to 7 and 9 schematically represent different steps of the method of the invention;
- figure 8 represents an enlarged detail of figure 7;
- figure 10 represents an enlarged detail of figure 9;
- figure 11 represents the same detail of figure 4, obtained according to a variant of the method according to the invention.

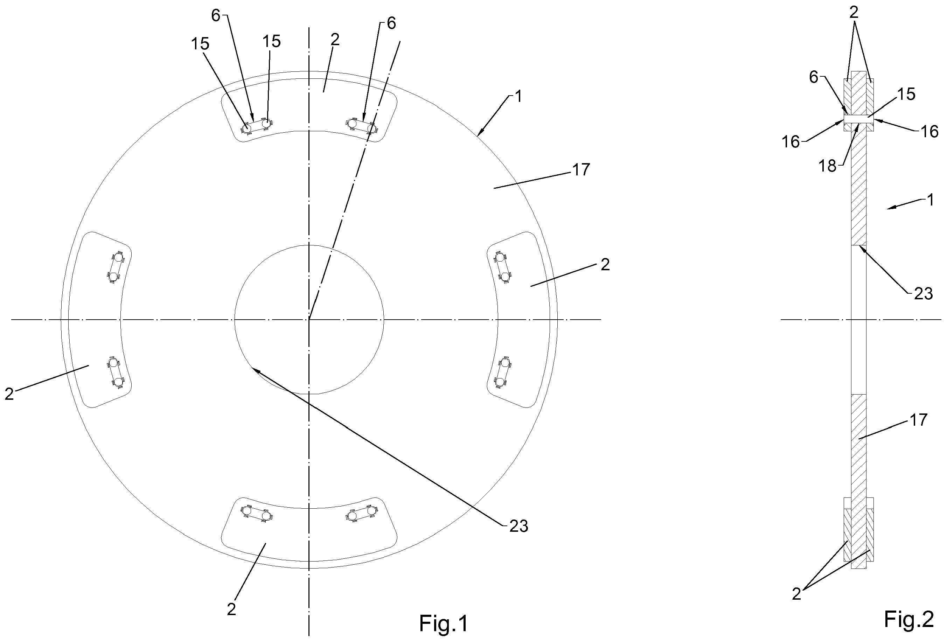

The method of the invention regards the production of a damping mass particularly suitable for use in a flywheel of the type schematically represented in figure 1 and herein indicated in its entirety with **1.** The aforementioned flywheel is particularly suitable for use in a gear unit, for example in a vehicle clutch.

The flywheel **1** is made up of a disc-shaped body **17,** for example obtained by blanking a steel metal sheet, provided with a central hole **23** for coupling to a shaft, not represented in the figure.

A plurality of damping masses **2** is mounted on the disc-shaped body **17.**

Right from now, it should be observed that the method according to the invention can be used regardless of the number and shape of the damping masses **2** associated to the flywheel **1.**

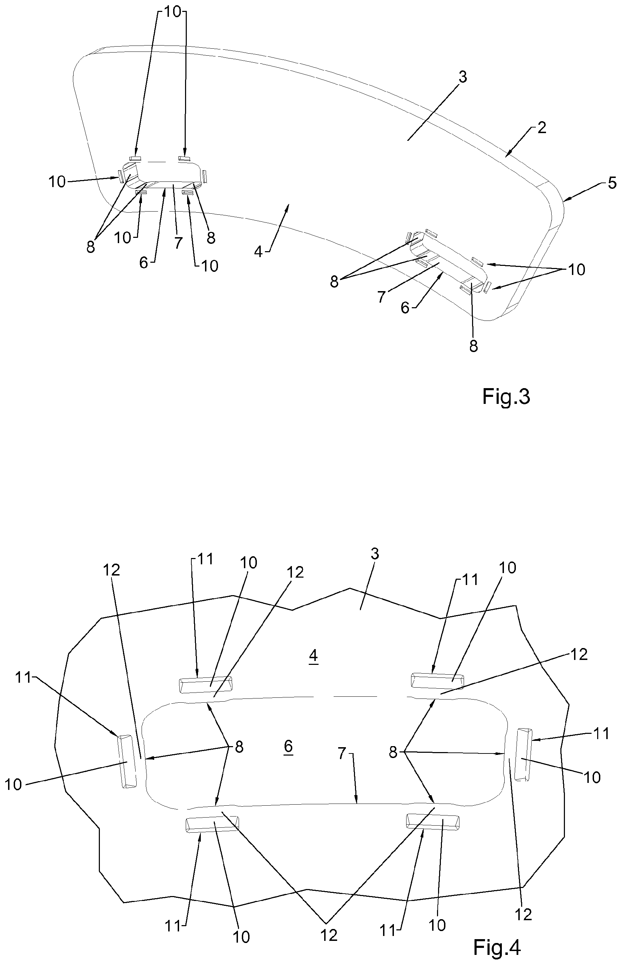

As observable in figure 3, each damping mass **2** is a laminate body **3** made of ductile material, preferably made of steel.

The laminate body **3** is delimited - along the thickness - by two juxtaposed faces **4, 5** and it has a plurality of through slots **6** extending through the aforementioned thickness, in turn delimited by corresponding perimeter surfaces **7.** Right from now, it should be observed that the present invention is applicable regardless of the number and shape of the through slots **6** present in each damping mass **2.**

The through slots **6** are configured to receive - with centesimal precision - the ends of corresponding coupling elements **15,** observable in figure 2. The aforementioned ends are stably connected to the corresponding through slots **6,** while the juxtaposed ends remain projecting from the laminate body **3** so as to be slidably inserted into guide grooves **18** belonging to the disc-shaped body **17** and extending according to predefined trajectories around the axis of the disc-shaped body **17.**

In particular, the guide grooves **18** are configured to receive the ends of the coupling elements **15** so as to enable the sliding thereof along the corresponding predefined trajectories.

Furthermore, the coupling elements **15** are constrained to the laminate body **3** so as to prevent the separation of the latter from the disc-shaped body **17.** Thus, the damping mass **2** can slide - with respect to the disc-shaped body **17** - around the axis of the latter.

Preferably, at both ends **16** of each coupling element **15** there are coupled respective damping masses **2,** arranged on respective juxtaposed sides of the disc-shaped body **17.** Furthermore, in variant embodiments of the invention, each coupling element **15** could be used for connecting a single damping mass **2** to the disc-shaped body **17.**

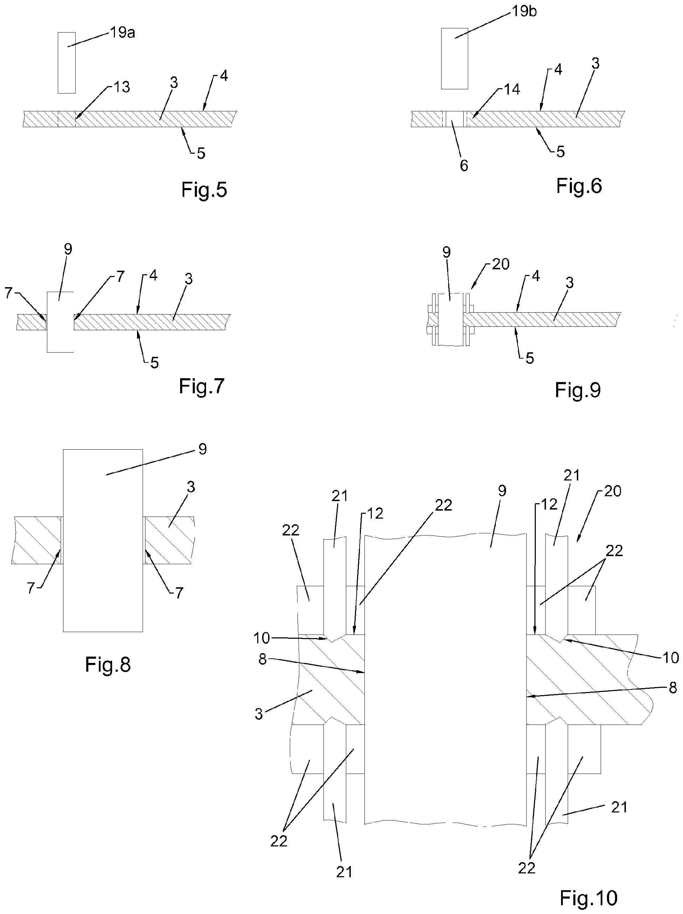

According to the invention, the through slots **6** are obtained by blanking - from the laminate body **3** - from a sheet made of material, as schematically observable in figures 5 and 6 and as described in detail hereinafter.

Furthermore, as observable in figures 7 and 8, in each through slot **6** there is inserted a die **9** configured to define a clearance between the surface of the die **9** and a plurality of first portions **8** of the perimeter surface **7** of the through slot **6.**

In particular, the surface zones of the die **9** designated to be faced to the aforementioned first portions **8** have a dimensional tolerance corresponding to the one required for zones of the perimeter surface **7** to which there is coupled a corresponding coupling element **15.**

Preferably but not necessarily, the through slot **6** is configured so that the die **9** can be inserted with a slight clearance on the entire perimeter surface **7,** so as to limit the wear of the die **9** when inserting and removing.

Solely by way of example, the aforementioned clearance can be comprised between 1% and 5% of the thickness of the laminate body **3.**

Subsequently and as observable in figures 9 and 10, the through slot **6** is plastically deformed so as to force the aforementioned first portions **8** of the perimeter surface **7** into contact with the die **9.**

The aforementioned plastic deformation causes the material of the laminate body **3** to compact so that the first portions **8** are arranged at close contact with the surface of the die **9,** so as to take the same surface properties, in particular the same shape and the same dimensional tolerance.

In light of the above, the use of a die **9** with predefined dimensional tolerance enables avoiding the use of fine blanking to obtain the through slot **6.** Thus, the through slot **6** can be blanked using a less accurate but faster blanking method with respect to fine blanking.

The aforementioned faster blanking obtains a quicker blanking, thus less production time for each piece. Furthermore, lesser blanking time enables using a "pitch" mould, thus further reducing the transit time of each produced piece. Lastly, the aforementioned blanking may be carried out using a conventional blanking machine instead of a fine blanking machine.

Both the lesser time required for machining each piece and the possibility of using a conventional blanking machine enable reducing the unitary cost of the piece with respect to the one that can be obtained with the methods of the known type, thus attaining the object of the invention.

Furthermore, the plastic deformation of the material leads to the work hardening of the latter at the first portions **8.** Advantageously, the aforementioned work hardening increases the resistance of the first portions **8** against stresses transmitted by the coupling element **15** inserted therein, increasing the coupling efficiency and the durability thereof.

Still advantageously, the die **9** has greater durability than the punches used for fine blanking according to the prior art. As a matter of fact, the die **9** is not subjected to stresses related to sliding against the laminate body **3** comparable to the ones to which a punch used for fine blanking is subjected. Thus, advantageously, costs related to the maintenance and/or replacement of equipment are reduced.

Preferably, the aforementioned plastic deformation occurs by compressing the laminate body **3** along the thickness thereof. Due to the aforementioned compression, the first portions **8** expand inwards with respect to the through slot **6.**

Advantageously, the aforementioned compression can be obtained in a pitch mould in succession to the aforementioned blanking of the through slot **6,** so as to simplify the production process.

Preferably and as observable in figures 9 and 10, the operation for the plastic deformation of the through slot **6** occurs by applying localised pressures on corresponding pressure areas **11** of the two juxtaposed faces **4, 5** of the laminate body **3,** so as to generate corresponding recesses **10** on the faces **4, 5,** observable in figure 4.

Advantageously, applying the aforementioned localised pressures enables limiting the geometric alterations of the laminate body **3** and reducing the force required to obtain the plastic deformation. As a matter of fact, as observable in detail in figure 4, the through slot **6** has areas aligned to the recesses **10** which are rounded towards the inside of the slot, the recesses corresponding to the
first surface portions **8.**

In a variant embodiment thereof, the method according to the invention comprises an operation of inserting - into the through slot **6** - a die **9** configured so as to define a clearance between the surface of the die **9** and at least one first portion **8** of the perimeter surface **7,** the aforementioned operation providing for the insertion - into said through slot **6** - of a die **9** configured so as to define a clearance between the outer surface of the die **9** and the entire perimeter surface **7,** so that the subsequent operation of plastically deforming the through slot **6** is such to force the entire perimeter surface **7** into contact with the die **9.**

The aforementioned plastic deformation causes the material of the laminate body **3** to compact so that the entire perimeter surface **7** is arranged at close contact with the surface of the die **9,** so as to take the same surface properties, in particular the same shape and the same dimensional tolerance.

In such case, the operation of plastically deforming the through slot **6** is carried out by applying localised pressure on an annular pressure area **111,** that extends surrounding the through slot **6,** on one or both the two juxtaposed faces **4, 5** of the laminate body **3,** so as to generate a single annular recess **110,** or a groove, on one or both faces **4, 5.**

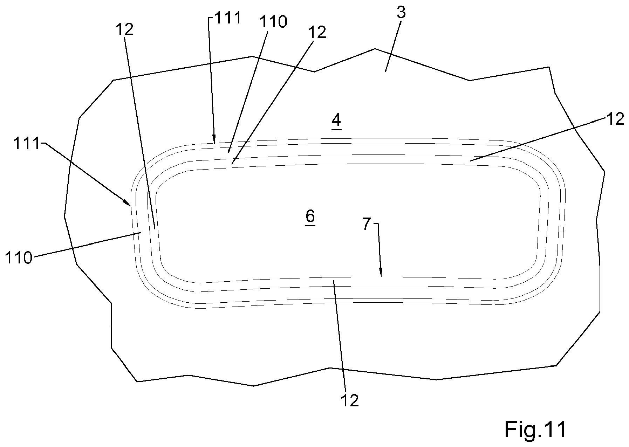

A slot **6** obtained with such variant of the method according to the invention is shown in figure 11 by way of example.

Still advantageously, application of pressures on both faces **4, 5** of the laminate body **3** enables reducing the force to be applied to obtain the required plastic deformation of the laminate body **3.** Reducing the aforementioned force leads to the simplification of the equipment, reduction of wear of the latter and limited geometrical alterations of the faces of the laminate body **3.**

However, this without prejudice to the fact that, in variant embodiments of the invention, the aforementioned localised pressures can be exerted only on one of the faces **4, 5** of the laminate body **3,** instead of on both.

Preferably, the aforementioned pressure areas **11** are spaced from the edge of the through slot **6** so as not to be placed in communication with the latter.

Advantageously, this enables preventing the recesses **10** from interfering with the edge of the through slots **6.**

Preferably, the above is obtained by arranging each recess **10** at a distance from the through slot **6** comprised between 10% and 50% of the thickness of the laminate body **3.** It has been observed that the aforementioned values represent a good compromise between the opposite needs of limiting the force required to obtain the plastic deformation of the through slot **6,** that would require moving the recesses **10** away from the through slots, and of preventing interference between the recesses **10** and the edge of the through slots, which instead would require approaching the recesses to the through slots.

If the distance of the recesses **10** from the through slots **6** is the one indicated above, the required plastic deformation of the through slots can be obtained by limiting the depth of the recesses **10** to a value comprised between 10% and 50% of the thickness of the laminate body **3.**

It is clear that the values indicated above are by way of example and depend on the material of the laminate body **3,** the thickness thereof, the shape of the through slot **6** and the dimension of the latter, on the fact that the localised pressure is applied on one or both faces of the laminate body **3,** the base dimension of the recesses **10,** and other parameters.

As regards the shape of the recesses **10,** each one of them preferably has a section having a triangular profile according to a plane perpendicular to the corresponding face **4, 5** of the laminate body **3.** Advantageously, the aforementioned triangular profile facilitates the penetration of the punches **21** into the faces **4, 5,** thus reducing the force to be applied. Still advantageously, the inclination of the face of the punches **21** facing towards the through slot **6** facilitates the thrust of the material towards the slot.

Still preferably, the aforementioned triangular profile has the vertex displaced in the direction opposite to the through slot **6,** so that the section is asymmetrical with respect to a plane perpendicular to the sectional plane and the faces **4, 5.** Thus, the triangular profile has a first side facing towards the through slot **6** which is longer than the second side opposite to the first. Advantageously, the aforementioned asymmetric shape of the section enables increasing the plastic deformation efficiency, thus further limiting the force to be applied.

Still preferably, the vertex of the triangular profile is arranged so that the aforementioned second side is perpendicular to the corresponding face **4, 5.** With reference to figure 10, this is equivalent to arranging the aforementioned vertex aligned with the wall of the punch **21** juxtaposed with respect to the through slot **6.** Advantageously, the configuration outlined above delimits the displacement of the material towards the outside of the punches **21** to the minimum, thus maximising the efficiency of the thrust and minimising the force to be applied.

It should be observed that, in other variant embodiments of the method according to the invention - not represented for the sake of simplicity - the section of the recess **10** and **110** according to a plane perpendicular to the corresponding face **4, 5** of the laminate body **3** may have a variously shaped similar and technically equivalent profile, depending on the needs and contingent technical requirements.

Preferably, during the plastic deformation of the laminate body **3,** the intermediate areas **12** of the faces **4, 5** comprised between the edge of the aforementioned pressure areas **11** and the edge of the through slots **6** are constrained so as to prevent the aforementioned intermediate areas **12** from swelling due to the plastic deformation of the laminate body **3.** Advantageously, the aforementioned constraint increases the compression efficiency and avoids unwanted deformations of the laminate body **3.**

Preferably, each pressure area **11** extends parallel to the edge of the through slot **6** for a length smaller than twice the length of the corresponding first portion **8** and it is also adjacent to the latter. This advantageously enables limiting the extension of the aforementioned recesses **10,** thus limiting the deformation of the laminate body **3.** For the same reason, the base shape of the pressure area **11** is preferably extended parallel to the edge of the through slot **6.**

As observable in figure 5, the operation of blanking the through slot **6** preferably comprises a first blanking operation by means of a first punch **19a,** which removes a first portion **13** of the laminate body **3** contained in the perimeter of the through slot **6.** In figure 5, the first portion **13** is indicated by dashed lines before blanking.

The aforementioned first blanking operation is followed by a second blanking operation, represented in figure 6, during which a second punch **19b** - bigger than the first punch **19a** - removes from the laminate body **3** a second portion **14** which perimetrically delimits the aforementioned first portion **13** and which is indicated with dashed lines in figure 6.

Advantageously, carrying out the blanking in two steps, as described above, enables increasing the blanking precision, so as to limit the amount of the subsequent plastic deformation.

It is clear that variant embodiments of the method of the invention can comprise more than two blanking steps in succession.

It is clear that the aforementioned blanking steps can be carried out in an equal number of subsequent steps of a pitch mould.

As concerns obtaining the laminate body **3,** it is preferably obtained by blanking a sheet. It is clear that this blanking can also be obtained in a pitch mould.

As regards the die **9,** it is preferably made of a harder material with respect to the material of the laminate body **3.** Advantageously, this enables avoiding localised deformations and/or damages on the surface of the die **9,** so as to increase the durability of the latter and the machining precision.

Should the laminate body **3** be made of steel, the die **9** is preferably made of tempered steel, possibly subjected to a further surface chemical treatment.

Still preferably, the surface of the die **9** is lapped in a manner such to obtain greater dimensional precision of the first surface portions **8** and reduce the wear of the die **9** when it is slipped off from the through slot **6** after machining.

Preferably, the method of the invention described above is carried out through a plant comprising a blanking unit, comprising a mould, not represented in the figures but per se known, for blanking the laminate body **3** from a sheet.

The blanking unit also comprises a first punch **19a,** visible in figure 5, for blanking the through slot **6.**

Preferably, the first punch **19a** is smaller than the through slot **6,** so as to blank a first material portion **13** contained in the profile of the through slot **6.** The blanking unit preferably comprises a second punch **19b,** visible in figure 6, which is actuated subsequently to the first punch **19a** to blank a second material portion **14** surrounding the aforementioned first portion **13.**

The plant further comprises the previously described die **9,** that can be inserted into the through slot **6** with clearance as observable in figures 7 and 8. The die **9** is associated to a guide device, not represented in the figures but per se known, for inserting the die **9** into the through slot **6.**

The plant also comprises a thrust unit **20,** represented in figures 9 and 10, for plastically deforming the through slot **6** and forcing the perimeter surface **7** thereof towards the inside of the slot and into contact with the die **9,** as described previously. Preferably, the thrust unit **20** comprises a thrust device suitable to compress the laminate body **3** along the thickness thereof.

Preferably, the aforementioned thrust device comprises one or more punches **21** which exert localised pressures on corresponding pressure areas **11** of one or both juxtaposed faces **4, 5** of the laminate body **3.** The punches **21** are associated to a forcing unit, not represented in the drawings but per se known, for pushing the punches against the faces **4, 5** so as to exert the aforementioned localised pressures.

Preferably, the base shapes of the aforementioned punches **21** are extended according to directions parallel to the edge of the through slot **6.** Still preferably, the sections of the punches **21** are triangular with the vertex displaced inwards with respect to the through slot **6.**

Still preferably, the thrust unit **20** comprises one or more first containment elements **22,** each positionable at contact with a face **4, 5** of the laminate body **3** between the die **9** and a corresponding punch **21,** suitable to prevent the swelling of the laminate body **3** when applying the aforementioned localised pressures.

Preferably and as observable in figure 10, the thrust unit **20** also comprises second containment elements **22,** each positionable at contact with a face **4, 5** of the laminate body **3** on the side of a corresponding punch **21** which is positioned juxtaposed with respect to a corresponding first containment element **22.**

Preferably, the mould and the punches **19a, 19b** of the blanking unit, the die **9,** the punches **21** and the containment elements **22** of the thrust unit **20** are configured as subsequent steps in a mould of the "pitch" type. In particular, the mould for blanking the laminate body **3** belongs to a first pitch, the punches **19a** and **19b** respectively belong to a second and third pitch, the die **9,** the punches **21** and the containment elements **22** belong to a fourth pitch.

It is clear that, in variant embodiments of the plant of the invention, the pitch mould may provide for other steps, which may precede or follow the steps described above or, still, they may be intermediate with respect thereto.

In light of the above, it is clear that the method described above, the damping mass obtained through such method and the plant that implements such method attain the object of the invention.

In particular, providing the through slot of the damping mass by means of blanking followed by plastic deformation of the material inwards with respect to the through slot against a die to obtain the predefined dimensional tolerance of the perimeter surface of the slot enables avoiding the use of the fine blanking, with advantages in terms of the production costs and equipment costs described above.

## Claims

1. Method for producing a damping mass (2) for a flywheel (1), in particular a transmission flywheel, comprising the following operations:
- providing a laminate body (3) provided with two juxtaposed faces (4, 5) delimiting said laminate body (3) along the direction of its thickness;
- blanking from said laminate body (3) at least one through slot (6) extended through said thickness, said through slot (6) being delimited by a perimeter surface (7);
**characterised in that** it comprises the following further operations:
- inserting a die (9) in said through slot (6), said die being configured so as to define a clearance between the surface of said die (9) and at least one first portion (8) of said perimeter surface (7);
- plastically deforming said through slot (6) so as to force said first portion (8) into contact with said die (9).

2. Method according to claim 1, **characterised in that** said operation of plastically deforming said through slot (6) is accomplished by applying a compression on said laminate body (3) in the direction of said thickness.

3. Method according to claim 2, **characterised in that** said compression is accomplished by exerting a localised pressure on a corresponding pressure area (11) belonging to at least a first one of said juxtaposed faces (4, 5) so as to generate a corresponding recess (10).

4. Method according to claim 3, **characterised in that** said localised pressure is exerted on corresponding pressure areas (11) belonging to both said juxtaposed faces (4, 5).

5. Method according to any one of claims 3 or 4, **characterised in that** each pressure area (11) is spaced from said through slot (6).

6. Method according to any one of claims 3 to 5, **characterised in that** each pressure area (11) extends parallel to the edge of said through slot (6) for a length shorter than twice the length of said first surface portion (8) and is arranged adjacent to said first surface portion (8).

7. Method according to any one of claims 3 to 6, **characterised in that** each pressure area (11) has a shape which is elongated parallel to the edge of said through slot (6).

8. Method according to any one of claims 3 to 7, **characterised in that** said recess (10) has a section according to a plane perpendicular to said first face (4) with a triangular-shaped profile, the side of said profile facing said through slot (6) being longer than the side juxtaposed to said through slot (6).

9. Method according to any one of claims 3 to 8, **characterised in that** it comprises the operation of constraining an intermediate area (12) of said first face (4) comprised between the edge of said pressure area (11) and the edge of said through slot (6) during the application of said localised pressure so as to prevent the swelling of said laminate body (3) at said intermediate area (12).

10. Method according to any one of the preceding claims, **characterised in that** said operation of blanking said through slot (6) comprises a first blanking operation to remove a first portion (13) of said laminate body (3) contained inside the area of said through slot (6) and a second blanking operation subsequent to said first blanking operation to remove a second portion (14) of said laminate body (3) perimetrically delimiting said first portion (13).

11. Method according to any one of the preceding claims, **characterised in that** said laminate body (3) is obtained by blanking a sheet.

12. Method according to any one of the preceding claims, **characterised in that** said through slot (6) is configured so as to allow the insertion of said die (9) with clearance.

13. Method according to any one of the preceding claims, **characterised in that** said die (9) is made of a harder material with respect to the material of said laminate body (3).

14. Method according to one or more of claims 1 to 5, and from 9 to 13, **characterised in that** said operation of inserting - into said through slot (6) - a die (9) configured so as to define a clearance between the surface of said die (9) and at least one first portion (8) of said perimeter surface (7) provides for the insertion - into said through slot (6) - of a die (9) configured so as to define a clearance between the outer surface of said die (9) and the entire perimeter surface (7), so that said subsequent operation of plastically deforming said through slot (6) is such to force the entire perimeter surface (7) into contact with said die (9).

15. Method for producing a flywheel (1), in particular a transmission flywheel, comprising the following operations:
- providing at least one damping mass (2) comprising a through slot (6) delimited by a perimeter surface (7);
- firmly coupling a coupling element (15) to said through slot (6) so that an end (16) of said coupling element (15) projects from said damping mass (2);
- providing a disc-shaped body (17) provided with a guide groove (18) extending according to a predefined trajectory, said guide groove (18) being configured to receive said end (16) of said coupling element (15) so as to allow the sliding thereof along said predefined trajectory;
- inserting said coupling element (15) in said guide groove (18);
- constraining said end (16) of said coupling element (15) to said guide groove (18) so as to prevent the separation thereof;
**characterised in that** said damping mass (2) is obtained with a method according to any one of the preceding claims.

## Patentansprüche

1. Verfahren zur Herstellung einer Dämpfungsmasse (2) für ein Schwungrad (1), insbesondere für ein Antriebsschwungrad, folgende Vorgänge umfassend:
- Bereitstellen eines blätterförmigen Körpers (3) mit zwei nebeneinanderliegenden Seiten (4, 5), die den besagten blätterförmigen Körper (3) entlang der Richtung seiner Dicke begrenzen;
- Ausstanzen aus dem besagten blätterförmigen Körper (3) von wenigstens einem durchgehenden Schlitz (6) über die gesamte, besagte Dicke, wobei der besagte durchgehende Schlitz (6) durch eine Umfangsfläche (7) begrenzt ist;
**dadurch gekennzeichnet, dass** es die folgenden, weiteren Vorgänge umfasst:
- Einsetzen eines Formwerkzeugs (9) in den besagten durchgehenden Schlitz (6), wobei das besagte Formwerkzeug so konfiguriert ist, dass es ein Spiel zwischen der Oberfläche des besagten Formwerkzeugs (9) und wenigstens einem ersten Abschnitt (8) der besagten Umfangsfläche (7) definiert;
- plastische Verformung des besagten durchgehenden Schlitzes (6), um den Kontakt des besagten ersten Abschnitts (8) mit dem besagten Formwerkzeug (9) zu forcieren.

2. Verfahren nach Patentanspruch 1, **dadurch gekennzeichnet, dass** der besagte Vorgang der Verformung des besagten durchgehenden Schlitzes (6) dadurch erfolgt, dass der besagte blätterförmige Körper (3) in Richtung der besagten Dicke komprimiert wird.

3. Verfahren nach Patentanspruch 2, **dadurch gekennzeichnet, dass** die besagte Kompression durch Ausübung eines lokalisierten Drucks auf einen entsprechenden, zu wenigstens einer ersten der besagten, nebeneinanderliegenden Seiten (4, 5) gehörenden Druckbereich (11) erfolgt, um eine entsprechende Vertiefung (10) zu erzeugen.

4. Verfahren nach Patentanspruch 3, **dadurch gekennzeichnet, dass** der besagte, lokalisierte Druck auf entsprechende Druckbereiche (11) ausgeübt wird, die zu beiden besagten, nebeneinanderliegenden Seiten (4, 5) gehören.

5. Verfahren nach einem jeden der Patentansprüche 3 oder 4, **dadurch gekennzeichnet, dass** jeder Druckbereich (11) von dem besagten durchgehenden Schlitz (6) distanziert ist.

6. Verfahren nach einem jeden der Patentansprüche von 3 bis 5, **dadurch gekennzeichnet, dass** sich jeder Druckbereich (11) über eine Länge, die kürzer ist als das Zweifache der Länge des besagten ersten Oberflächenabschnitts (8), parallel zu der Kante des besagten durchgehenden Schlitzes (6) erstreckt und an den besagten ersten Oberflächenabschnitt (8) angrenzend angeordnet ist.

7. Verfahren nach einem jeden der Patentansprüche von 3 bis 6, **dadurch gekennzeichnet, dass** jeder Druckbereich (11) eine Form aufweist, die länglich parallel zur Kante des besagten durchgehenden Schlitzes (6) ist.

8. Verfahren nach einem jeden der Patentansprüche von 3 bis 7, **dadurch gekennzeichnet, dass** die besagte Vertiefung (10) entsprechend einer zu der besagten ersten Seite (4) lotrechten Ebene einen Querschnitt mit einem dreieckig geformten Profil aufweist, wobei die Seite des besagten Profils zu dem besagten durchgehenden Schlitz (6) gerichtet ist, da sie länger ist als die neben dem besagten durchgehenden Schlitz (6) liegende Seite.

9. Verfahren nach einem jeden der Patentansprüche von 3 bis 8, **dadurch gekennzeichnet, dass** es den Vorgang der Einzwingung eines zwischen der Kante des besagten Druckbereichs (11) und der Kante des besagten durchgehenden Schlitzes (6) liegenden Zwischenbereichs (12) der besagten ersten Seite (4) umfasst, während der besagte lokalisierte Druck ausgeübt wird, um das Schwellen des besagten blätterförmigen Körpers (3) in dem besagten Zwischenbereich (12) zu vermeiden.

10. Verfahren nach einem jeden der vorstehenden Patentansprüche, **dadurch gekennzeichnet, dass** der Vorgang des Ausstanzens des besagten durchgehenden Schlitzes (6) einen ersten Stanzvorgang umfasst, um einen ersten Abschnitt (13) des besagten blätterförmigen Körpers (3) zu entfernen, der sich innerhalb des Bereichs des besagten durchgehenden Schlitzes (6) befindet, und einen auf den ersten Stanzvorgang folgenden, zweiten Stanzvorgang zur Entfernung eines zweiten Abschnitts (14) des besagten blätterförmigen Körpers (3), der den Umfang des besagten ersten Abschnitts (13) begrenzt.

11. Verfahren nach einem jeden der vorstehenden Patentansprüche, **dadurch gekennzeichnet, dass** der besagte blätterförmige Körper (3) durch Stanzen eines Blechs gewonnen wird.

12. Verfahren nach einem jeden der vorstehenden Patentansprüche, **dadurch gekennzeichnet, dass** der besagte durchgehende Schlitz (6) so konfiguriert ist, dass er das Einsetzen des besagten Formwerkzeugs (9) mit Spiel erlaubt.

13. Verfahren nach einem jeden der vorstehenden Patentansprüche, **dadurch gekennzeichnet, dass** das besagte Formwerkzeug (9) im Vergleich zum Werkstoff des blätterförmigen Körpers (3) aus einem härteren Werkstoff gefertigt ist.

14. Verfahren nach einem oder mehreren der Patentansprüche von 1 bis 5 und von 9 bis 13, **dadurch gekennzeichnet, dass** der besagte Vorgang des Einsetzens - in den besagten durchgehenden Schlitz (6) - eines Formwerkzeugs (9), das so konfiguriert ist, dass es ein Spiel zwischen der Oberfläche des besagten Formwerkzeugs (9) und wenigstens einem ersten Abschnitt (8) der besagten Umfangsfläche (7) definiert, die Einsetzung - in den besagten durchgehenden Schlitz (6) - eines Formwerkzeugs (9) vorsieht, das so konfiguriert ist, dass es ein Spiel zwischen der Außenfläche des besagten Formwerkzeugs (9) und der gesamten Umfangsfläche (7) definiert, so dass der besagte, anschließende Vorgang der plastischen Verformung des besagten durchgehenden Schlitzes (6) derart erfolgt, dass der Kontakt der gesamten Umfangsfläche (7) mit dem besagten Formwerkzeug (9) forciert wird.

15. Verfahren zur Herstellung eines Schwungrads (1), insbesondere eines Antriebsschwungrads, folgende Vorgänge umfassend:
- Bereitstellung wenigstens einer Dämpfungsmasse (2), einen durchgehenden Schlitz (6) umfassend, der durch eine Umfangsfläche (7) begrenzt ist;
- feste Kupplung eines Kupplungselements (15) an den besagten durchgehenden Schlitz (6), so dass ein Ende (16) des besagten Kupplungselements (15) aus der besagten Dämpfungsmasse (2) hervorsteht;
- Bereitstellung eines scheibenförmigen Körpers (17) mit einer Führungsnut (18), die sich einer vorbestimmten Trajektorie gemäß erstreckt, wobei die besagte Führungsnut (18) so konfiguriert ist, dass sie das besagte Ende (16) des besagten Kupplungselements (15) aufnimmt, um das Gleiten desselben entlang der besagten vorbestimmten Trajektorie zu erlauben;
- Einsetzen des besagten Kupplungselements (15) in die besagte Führungsnut (18);
- Fixierung des besagten Endes (16) des besagten Kupplungselements (15) an der besagten Führungsnut (18), so dass seine Loslösung verhindert wird;
**dadurch gekennzeichnet, dass** die besagte Dämpfungsmasse (2) mit einem Verfahren nach einem jeden der vorstehenden Patentansprüche gewonnen wird.

## Revendications

1. Méthode pour la production d'une masse d'amortissement (2) pour un volant (1), en particulier un volant de transmission, comprenant les opérations suivantes:
- prédisposition d'un corps laminaire (3) doté de deux faces juxtaposées (4, 5) qui délimitent ledit corps laminaire (3) le long de la direction de son épaisseur;
- tranchement, dudit corps laminaire (3), d'au moins une fente passante (6) étendue à travers ladite épaisseur, ladite fente passante (6) étant délimitée par une surface de périmètre (7);
**caractérisée en ce qu'**elle comprend les opérations supplémentaires suivantes:
- introduction d'une matrice (9) dans ladite fente passante (6), ladite matrice étant configurée de manière à définir un jeu entre la surface de ladite matrice (9) et au moins une première portion (8) de ladite surface de périmètre (7);
- déformation plastique de ladite fente passante (6) de manière à forcer ladite première portion (8) au contact avec ladite matrice (9).

2. Méthode selon la revendication 1, **caractérisée en ce que** ladite opération de déformation plastique de ladite fente passante (6) se réalise en exerçant une compression dudit corps laminaire (3) dans le sens de ladite épaisseur.

3. Méthode selon la revendication 2, **caractérisée en ce que** ladite compression est réalisée en exerçant une pression localisée sur une zone de pression correspondante (11) appartenant à au moins une première desdites faces juxtaposées (4, 5) de manière à générer une cavité correspondante (10).

4. Méthode selon la revendication 3, **caractérisée en ce que** ladite pression localisée est exercée sur des zones de pression correspondantes (11) appartenant aux deux faces juxtaposées (4, 5).

5. Méthode selon l'une quelconque des revendications 3 ou 4, **caractérisée en ce que** chaque zone de pression (11) est espacée de ladite fente passante (6).

6. Méthode selon l'une quelconque des revendications de 3 à 5, **caractérisée en ce que** chaque zone de pression (11) s'étend parallèlement au bord de ladite fente passante (6) pour une longueur inférieure à deux fois la longueur de ladite première portion de surface (8) et est disposée adjacente à ladite première portion de surface (8).

7. Méthode selon l'une quelconque des revendications de 3 à 6, **caractérisée en ce que** chaque zone de pression (11) présente une forme allongée parallèle au bord de ladite fente passante (6).

8. Méthode selon l'une quelconque des revendications de 3 à 7, **caractérisée en ce que** ladite cavité (10) présente une section selon un plan perpendiculaire à ladite première face (4) ayant un profil de forme triangulaire, le côté dudit profil tourné vers ladite fente passante (6) étant plus long que le côté juxtaposé à ladite fente passante (6).

9. Méthode selon l'une quelconque des revendications de 3 à 8, **caractérisée en ce qu'**elle comprend l'opération de bloquer une zone intermédiaire (12) de ladite première face (4) comprise entre le bord de ladite zone de pression (11) et le bord de ladite fente passante (6) durant l'application de ladite pression localisée de manière à empêcher le gonflement dudit corps laminaire (3) à hauteur de ladite zone intermédiaire (12).

10. Méthode selon l'une quelconque des revendications précédentes, **caractérisée en ce que** ladite opération de tranchement de ladite fente passante (6) comprend une première opération de tranchement pour enlever une première portion (13) dudit corps laminaire (3) contenue à l'intérieur de la zone de ladite fente passante (6) et une deuxième opération de tranchement successive à ladite opération de tranchement pour enlever une deuxième portion (14) dudit corps laminaire (3) qui délimite de manière périmétrique ladite première portion (13).

11. Méthode selon l'une quelconque des revendications précédentes, **caractérisée en ce que** ledit corps laminaire (3) est obtenu par tranchement à partir d'une tôle.

12. Méthode selon l'une quelconque des revendications précédentes, **caractérisée en ce que** ladite fente passante (6) est configurée de manière à consentir l'introduction de ladite matrice (9) avec un jeu.

13. Méthode selon l'une quelconque des revendications précédentes, **caractérisée en ce que** ladite matrice (9) est réalisée en un matériau plus dur par rapport au matériau dudit corps laminaire (3).

14. Méthode selon l'une ou plusieurs des revendications de 1 à 5 et de 9 à 13, **caractérisée en ce que** ladite opération d'introduction, dans ladite fente passante (6), d'une matrice (9) configurée de manière à définir un jeu entre la surface de ladite matrice (9) et au moins une première portion (8) de ladite surface de périmètre (7), prévoit l'introduction, dans ladite fente passante (6), d'une matrice (9) configurée de manière à définir un jeu entre la surface extérieure de ladite matrice (9) et toute la surface de périmètre (7), de manière à ce que ladite opération suivante de déformation plastique de ladite fente passante (6) soit apte à forcer toute la surface de périmètre (7) au contact avec ladite matrice (9).

15. Méthode pour la production d'un volant (1), en particulier un volant de transmission, comprenant les opérations suivantes:
- prédisposition d'au moins une masse d'amortissement (2) comprenant une fente passante (6) délimitée par une surface de périmètre (7);
- accouplement stable d'un élément d'accouplement (15) à ladite fente passante (6) de manière à ce qu'une extrémité (16) dudit élément d'accouplement (15) reste saillant de ladite masse d'amortissement (2);
- prédisposition d'un corps ayant la forme d'un disque (17) pourvu d'une cannelure de guidage (18) s'étendant selon une trajectoire prédéfinie, ladite cannelure de guidage (18) étant configurée de manière à accueillir ladite extrémité (16) dudit élément d'accouplement (15) de manière à consentir le coulissement de celle-ci le long de ladite trajectoire prédéfinie;
- introduction dudit élément d'accouplement (15) dans ladite cannelure de guidage (18);
- blocage de ladite extrémité (16) dudit élément d'accouplement (15) dans ladite cannelure de guidage (18) de manière à empêcher la séparation de ceux-ci;
**caractérisée en ce que** ladite masse d'amortissement (2) est réalisée en utilisant une méthode selon l'une quelconque des revendications précédentes.
